# EUROPÄISCHE PATENTSCHRIFT

(11) **EP 2 059 774 B1**
(45) Veröffentlichungstag und Bekanntmachung des Hinweises auf die Patenterteilung: **16.08.2017**
(21) Anmeldenummer: 08735667.1
(22) Anmeldetag: 02.04.2008
(51) Int. Cl.: G01F 23/36, H01C 10/30, H01C 10/38

(54) **SIGNALGEBER FÜR EINEN FÜLLSTANDSSENSOR**
SIGNAL TRANSMITTER FOR A FILLING LEVEL SENSOR
GÉNÉRATEUR DE SIGNAL POUR UN DÉTECTEUR DE NIVEAU

(30) Priorität: 04.05.2007 DE 102007021027
(43) Veröffentlichungstag der Anmeldung: 20.05.2009
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2008/053900
(87) Internationale Veröffentlichungsnummer: WO 2008/135324

(56) Entgegenhaltungen:
- DE-A1- 19 709 738
- DE-A1- 19 842 243
- US-A- 3 482 200
- US-A- 6 127 916
- US-A1- 2004 255 669

## Beschreibung

Die Erfindung betrifft einen Signalgeber für einen Füllstandssensor eines Behälters eines Kraftfahrzeuges zur Erzeugung von elektrischen Signalen in Abhängigkeit eines Schwenkwinkels eines einen Schwimmer tragenden Hebelarms des Füllstandssensors mit einem zur Befestigung an einer vertikalen Wandung im Behälter vorgesehenen, Schleifbahnen aufweisenden Träger, mit an dem Hebelarm angeordneten Schleifkontakten, wobei zwei Schleifkontakte jeweils auf einzelnen Federzungen und voneinander beabstandet auf einer gemeinsamen Brücke angeordnet sind.

Solche Signalgeber werden insbesondere zur Ermittelung von Füllständen an Kraftstoff in Kraftstoffbehältern heutiger Kraftfahrzeuge eingesetzt und sind aus der Praxis bekannt. In der Regel überbrücken zwei Schleifkontakte zwei Schleifbahnen des Signalgebers, so dass der Anschluss von weiterführenden elektrischen Leitungen ausschließlich an feststehenden Bauteilen erfolgen kann. Bei den bekannten Signalgebern ist die Brücke beweglich in dem Hebelarm gehalten. Das Federelement ist ebenfalls in dem Hebelarm gehalten und spannt die Brücke mittig vor. Die bewegliche Halterung der Brücke und das Federelement ermöglichen einen Kippausgleich der beiden Schleifkontakte zueinander. Hierdurch wird sichergestellt, dass die beiden Federkontakte jeweils mit derselben Kraft gegen die jeweilige Schleifbahn vorgespannt sind. Die Gesamtvorspannkraft der Schleifkontakte gegen die Schleifbahnen wird durch die in Reihe angeordneten Federzungen mit dem Federelement festlegt. Nachteilig bei dem bekannten Signalgeber ist jedoch, dass er aus sehr vielen zu montierenden Bauteilen besteht und daher sehr aufwändig zu fertigen ist. Aus der US 2004/0255669 ist ein Signalgeber mit einem Halter bekannt, an dem zwei Schleifkontakte mit jeweils mehreren Federzungen angeordnet sind. Der Erfindung liegt das Problem zugrunde, einen Signalgeber der eingangs genannten Art so weiterzubilden, dass er besonders einfach zu fertigen ist.

Dieses Problem wird erfindungsgemäß dadurch gelöst, dass zwei lang gestreckte Federelemente über einen quer zur Brücke angeordneten Querbalken mit der Brücke verbunden sind,
ein Halter zur Halterung der zwei Federelemente an dem Hebelarm vorgesehen ist,
der Halter, die zwei Federelemente, die Brücke und die Schleifkontakte mit den Federzungen einstückig gefertigt sind,
die zwei Federelemente zwischen dem Halter und dem Querbalken parallel zueinander angeordnet sind, und
ein die beiden lang gestreckten Federelemente verbindender Steg, der an dem Halter angelenkt ist, zusammen mit den zwei Federelementen und dem Querbalken einen Rahmen bilden, welcher die Schleifkontakte gemeinsam gegen die Schleifbahnen vorspannt.

Durch diese Gestaltung wird die Anzahl der zu montierenden Bauteile des erfindungsgemäßen Signalgebers besonders gering gehalten. Hierdurch lässt sich der erfindungsgemäße Signalgeber besonders einfach fertigen. Da der erfindungsgemäße Signalgeber wie der bekannte Signalgeber mit dem Federelement und den Federzungen zwei in Reihe angeordnete Federungen aufweist, wird ein Abheben der Schleifkontakte von den Schleifbahnen bei im Kraftfahrzeug häufig vorhandenen Vibrationen zuverlässig vermieden. Ein weiterer Vorteil dieser Gestaltung besteht darin, dass beispielsweise durch die Vibrationen oder ein Verschwenken des Hebelarms hervorgerufene Relativbewegungen zwischen mehreren Bauteilen dank der Einstückigkeit der Bauteile vermieden werden. Solche Relativbewegungen erzeugen unerwünschten Verschleiß und Reibung.

Der Kippausgleich der Schleifkontakte gestaltet sich besonders einfach, wenn das Federelement über einen quer zur Brücke angeordneten Querbalken mit der Brücke verbunden ist.

Die einstückige Fertigung der Bauteile des erfindungsgemäßen Signalgebers gestaltet sich besonders einfach, wenn der Halter, das Federelement und die Schleifkontakte mit den Federzungen aus einem Federblech ausgestanzt oder ausgeschnitten sind.

Der Querbalken könnte beispielsweise mittig an der Brücke angelenkt sein. Eine besonders gleichmäßige Vorspannung der Schleifkontakte gegen die Schleifbahnen lässt sich jedoch einfach erreichen, wenn der Querbalken näher an dem vom Halter entfernten Schleifkontakt an die Brücke angelenkt ist als an dem dem Halter nahen Schleifkontakt.

Eine besonders zuverlässige Vorspannung der Schleifkontakte gegen die Schleifbahnen lässt sich gemäß einer anderen vorteilhaften Weiterbildung der Erfindung sicherstellen, wenn das Federelement lang gestreckt gestaltet und parallel zu der Brücke angeordnet ist.

Zur weiteren Vereinfachung des Kippausgleichs der Schleifkontakte trägt es bei, wenn zwei Federelemente zwischen dem Halter und dem Querbalken parallel zueinander angeordnet sind.

Eine vorgesehene Federvorspannung der Schleifkontakte gegen die Schleifbahnen lässt sich einfach durch eine entsprechende Wahl der Abmessungen der Federelemente einstellen, wenn der Halter einen die beiden lang gestreckten Federelemente verbindenden Steg hat und wenn der Steg an dem Halter angelenkt ist. Bei festgelegtem Abstand des Halters zu den Schleifkontakten lassen sich die Längen der Federelemente durch die entsprechende Länge des Steges einfach variieren und damit die Federvorspannung einstellen. Insbesondere, wenn die lang gestreckten Federelemente über den Querbalken miteinander verbunden sind, wird ein verwindungssteifer Rahmen erzeugt, welcher zur Vergleichmäßigung der Vorspannung der Schleifkontakte gegen die Schleifbahnen beiträgt.

Die Fertigung der Schleifkontakte mit den Federzungen und den Federelementen aus einem Federblech gestaltet sich gemäß einer anderen vorteilhaften Weiterbildung der Erfindung besonders einfach, wenn in einer Draufsicht auf die Schleifkontakte einer der Schleifkontakte zwischen den Federelementen angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Füllstandssensor mit einem erfindungsgemäßen Signalgeber,
- Fig. 2: stark vergrößert einen Teilschnitt durch den Füllstandssensor aus Figur 1 entlang der Linie II - II.

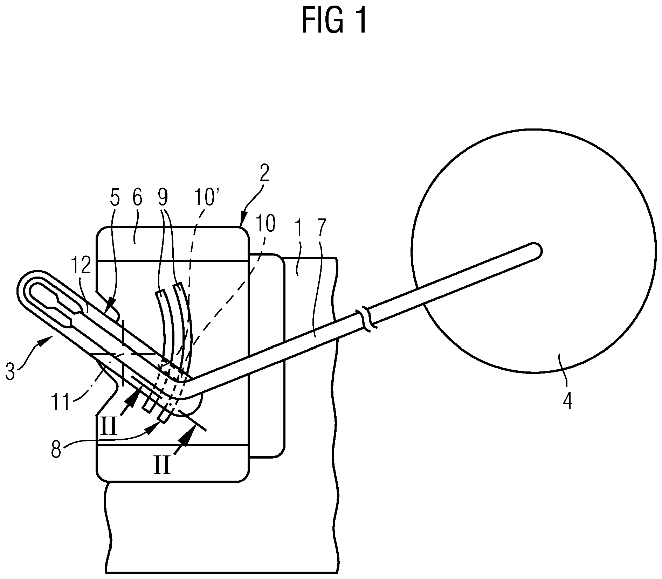

Figur 1 zeigt einen in einer senkrechten Wandung 1 innerhalb eines Kraftstoffbehälters montierten Füllstandssensor 2. Der Füllstandssensor 2 hat einen an einem Hebelarm 3 befestigten Schwimmer 4. Der Schwimmer 4 folgt einem nicht dargestellten Füllstand an Kraftstoff in dem Kraftstoffbehälter und verschwenkt dabei den Hebelarm 3. Der Hebelarm 3 ist mit einem aus Kunststoff gefertigten Bügel 5 an einem Träger 6 schwenkbar gelagert und hat einen an dem Bügel 5 befestigten Hebeldraht 7 zur Halterung des Schwimmers 4. Der Schwenkwinkel des Hebelarms 3 wird von einem als Potentiometer ausgebildeten Signalgeber 8 erfasst und in elektrische Signale umgesetzt. Der Signalgeber 8 hat zwei auf dem Träger 6 angeordnete Schleifbahnen 9, 9' und zwei an dem Bügel 5 befestigte und elektrisch miteinander verbundene Schleifkontakte 10, 10' zur Überbrückung der Schleifbahnen 9, 9'. Damit fallen die dem Füllstand an Kraftstoff entsprechenden elektrischen Signale an dem Träger 6 und damit an einem feststehenden Bauteil des Füllstandssensors 2 an. Der Hebelarm 3 hat eine Lagerung in dem Träger 6 mit senkrecht zur Zeichenebene verlaufender Lagerachse 11.

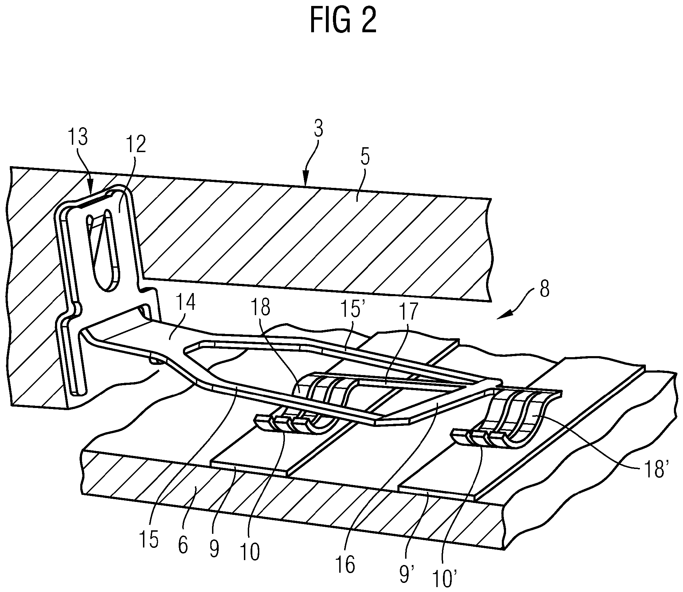

Figur 2 zeigt stark vergrößert in einer Schnittdarstellung durch den Füllstandssensor 2 aus Figur 1 entlang der Linie II - II wesentliche Bauteile des Signalgebers 8. Die Schleifkontakte 10, 10' sind mit einem Halter 12 verbunden. Der Halter 12 ist in einer Ausnehmung 13 des Bügels 5 verrastet und über einen abgewinkelten Steg 14 mit zwei lang gestreckten Federelementen 15, 15' verbunden. Die dem Steg 14 abgewandten Enden der Federelemente 15, 15' sind über einen Querbalken 16 untereinander und mit einer Brücke 17 der Schleifkontakte 10, 10' verbunden. Die beiden lang gestreckten Federelemente 15, 15' sind parallel zu der Brücke 17 angeordnet. Die Schleifkontakte 10, 10' sind über Federzungen 18, 18' an der Brücke 17 angelenkt. Der Halter 12, der Steg 14, die lang gestreckten Federelemente 15, 15', der Querbalken 16, die Brücke 17, die Federzungen 18, 18' und die Schleifkontakte 10, 10' sind einstückig aus einem Federblech durch Ausschneiden und Biegen gefertigt. Hierfür sind die lang gestreckten Federelemente 15, 15' weiter voneinander beabstandet als die Schleifkontakte 10, 10' mit den Federzungen 18, 18' breit sind. Die lang gestreckten Federelemente 15, 15' bilden mit dem Steg 14 und dem Querbalken 16 einen Rahmen, welcher die beiden Schleifkontakte 10, 10' gemeinsam gegen die Schleifbahnen 9, 9' vorspannt und einen Kippausgleich zwischen den Schleifkontakten 10, 10' ermöglicht. Damit wird sichergestellt, dass die beiden Schleifkontakte 10, 10' jeweils mit derselben Kraft gegen die Schleifbahnen 9, 9' vorgespannt sind. Die Federzungen 18, 18' und die mit ihnen in Reihe angeordneten Federelemente 15, 15' erzeugen eine Vorspannung der Schleifkontakte 10, 10' gegen die Schleifbahnen 9, 9'. Der Querbalken 16 ist näher an dem dem Halter 12 entfernten Schleifkontakt 10' an der Brücke 17 angelenkt als an dem dem Halter 12 nahen Schleifkontakt 10, was zusätzlich zum Kippausgleich beiträgt.

## Patentansprüche

1. Signalgeber für einen Füllstandssensor eines Behälters eines Kraftfahrzeuges zur Erzeugung von elektrischen Signalen in Abhängigkeit eines Schwenkwinkels eines einen Schwimmer tragenden Hebelarms (3) des Füllstandssensors,
mit einem zur Befestigung an einer vertikalen Wandung im Behälter vorgesehenen, Schleifbahnen (9, 9') aufweisenden Träger (6),
mit an dem Hebelarm (3) angeordneten Schleifkontakten (10, 10'),
wobei zwei Schleifkontakte (10, 10') jeweils auf einzelnen Federzungen (18, 18') und voneinander beabstandet auf einer gemeinsamen Brücke (17) angeordnet sind,
**dadurch gekennzeichnet, dass**
zwei lang gestreckte Federelemente (15, 15') über einen quer zur Brücke (17) angeordneten Querbalken (16) mit der Brücke (17) verbunden sind,
ein Halter (12) zur Halterung der zwei Federelemente (15, 15') an dem Hebelarm(3) vorgesehen ist,
der Halter (12), die zwei Federelemente (15, 15'), die Brücke (17) und die Schleifkontakte (10, 10') mit den Federzungen (18, 18') einstückig gefertigt sind,
die zwei Federelemente (15, 15') zwischen dem Halter (12) und dem Querbalken (16) parallel zueinander angeordnet sind, und
ein die beiden lang gestreckten Federelemente (15, 15') verbindender Steg (14), der an dem Halter (12) angelenkt ist, zusammen mit den zwei Federelementen (15, 15') und dem Querbalken (16) einen Rahmen bilden, welcher die Schleifkontakte gemeinsam gegen die Schleifbahnen vorspannt.

2. Signalgeber nach Anspruch 1, **dadurch gekennzeichnet, dass** der Halter (12), die beiden Federelemente (15, 15') und die Schleifkontakte (10, 10') mit den Federzungen (18, 18') aus einem Federblech ausgestanzt oder ausgeschnitten sind.

3. Signalgeber nach Anspruch 1 oder 2, **dadurch gekennzeichnet, dass** der Querbalken (16) näher an dem vom Halter (12) entfernten Schleifkontakt (10') an die Brücke (17) angelenkt ist als an dem dem Halter (12) nahen Schleifkontakt (10).

4. Signalgeber nach zumindest einem der vorhergehenden Ansprüche, **dadurch gekennzeichnet, dass** die beiden Federelemente (15, 15') parallel zu der Brücke (17) angeordnet sind.

5. Signalgeber nach zumindest einem der vorhergehenden Ansprüche, **dadurch gekennzeichnet, dass** in einer Draufsicht auf die Schleifkontakte (10, 10') einer der Schleifkontakte (10) zwischen den Federelementen (15, 15') angeordnet ist.

## Claims

1. Signal transmitter for a filling level sensor of a motor-vehicle tank for producing electrical signals as a function of a pivoting angle of a filling level sensor lever arm (3) supporting a float,
with a support (6) provided for attachment to a vertical wall in the tank and having sliding tracks (9, 9'),
with sliding contacts (10, 10') arranged on the lever arm (3), each of two sliding contacts (10, 10')being arranged on individual spring tongues (18, 18') and spaced apart on a common bridge (17), **characterized in that** two elongate spring elements (15, 15') are connected to the bridge (17) by a transverse bar (16) arranged transversely to the bridge (17),
a holder (12) for holding the two spring elements (15, 15') on the lever arm (3) is provided,
the holder (12), the two spring elements (15, 15'), the bridge (17) and the sliding contacts (10, 10') with the spring tongues (18, 18') are manufactured in one piece,
the two spring elements (15, 15') are arranged parallel to one another between the holder (12) and the transverse bar (16), and
a web (14) which connects the two elongate spring elements (15, 15') and which is hinged on the holder (12) forms, together with the two spring elements (15, 15') and the transverse bar (16), a frame which preloads the sliding contacts jointly against the sliding tracks.

2. Signal transmitter according to Claim 1, **characterized in that** the holder (12), the two spring elements (15, 15') and the sliding contacts (10, 10') with the spring tongues (18, 18') are punched or cut out of a spring plate.

3. Signal transmitter according to Claim 1 or 2, **characterized in that** the transverse bar (16) is hinged to the bridge (17) at a point closer to the sliding contact (10') remote from the holder (12) than to the sliding contact (10) close to the holder (12).

4. Signal transmitter according to at least one of the preceding claims, **characterized in that** the two spring elements (15, 15') are arranged parallel to the bridge (17).

5. Signal transmitter according to at least one of the preceding claims, **characterized in that** one of the sliding contacts (10) is arranged between the spring elements (15, 15') in a plan view of the sliding contacts (10, 10').

## Revendications

1. Générateur de signal pour un détecteur de niveau d'un réservoir d'un véhicule automobile, destiné à générer des signaux électriques en fonction d'un angle de pivotement d'un bras de levier (3) portant un flotteur du capteur de niveau, comportant un support (6) présentant des bandes de frottement (9, 9'), prévu pour une fixation à une paroi verticale dans le réservoir,
comportant des contacts de frottement (10, 10') disposés sur le bras de levier (3),
dans lequel deux contacts de frottement (10, 10') sont respectivement disposés sur des languettes flexibles (18, 18') et espacés l'un de l'autre sur un pont (17) commun,
**caractérisé en ce que** deux éléments flexibles (15, 15') allongés sont reliés au pont (17) par l'intermédiaire d'une barre transversale (16) disposée transversalement au pont (17), **en ce qu'**il est prévu un support (12) destiné à fixer les deux éléments flexibles (15, 15') au bras de levier (3),
**en ce que** le support (12), les deux éléments flexibles (15, 15'), le pont (17) et les contacts de frottement (10, 10') sont réalisés en une seule pièce avec les languettes flexibles (18, 18'),
**en ce que** les deux éléments flexibles (15, 15') sont disposés parallèlement l'un à l'autre entre le support (12) et la barre transversale (16), et
**en ce qu'**une traverse (14) reliant les deux éléments flexibles allongés (15, 15'), qui est articulée sur le support (12), forme en association avec les deux éléments flexibles (15, 15') et la barre transversale (16) un cadre qui repousse les contacts de frottement en commun contre les bandes de frottement.

2. Générateur de signal selon la revendication 1, **caractérisé en ce que** le support (12), les deux éléments flexibles (15, 15') et les contacts de frottement (10, 10') sont estampés ou découpés avec les languettes flexibles (18, 18') à partir d'une tôle flexible.

3. Générateur de signal selon la revendication 1 ou 2, **caractérisé en ce que** la barre transversale (16) est articulée sur le pont (17) plus près du contact de frottement (10') éloigné du support (12) que du contact de frottement (10) proche du support (12).

4. Générateur de signal selon au moins l'une des revendications précédentes, **caractérisé en ce que** les deux éléments flexibles (15, 15') sont disposés parallèlement au pont (17).

5. Générateur de signal selon au moins l'une des revendications précédentes, **caractérisé en ce que** l'un des contacts de frottement (10) est disposé entre les éléments flexibles (15, 15') dans une vue de dessus des contacts de frottement (10, 10').
